# EUROPÄISCHE PATENTANMELDUNG

(11) **EP 0 581 068 A1**
(43) Veröffentlichungstag der Anmeldung: **02.02.1994**
(21) Anmeldenummer: 93110868.2
(22) Anmeldetag: 07.07.1993
(51) Int. Cl.: B65G 13/06, B65G 39/02, B65G 39/06

(54) **Rollenantriebseinheit**

(30) Priorität: 27.07.1992 DE 4224816
(71) Anmelder: Telair International Cargo Systems GmbH, D-83734 Hausham (DE)
(72) Erfinder: Sundseth, Jarl, D-83727 Schliersee (DE)
(74) Vertreter: Bohnenberger, Johannes, Dr.

(57) **Zusammenfassung**

Es sind Rollenantriebseinheiten bekannt, die eine über einen Elektromotor antreibbare Antriebsrolle (10) aufweisen, die in einem Rahmen von einer unteren Ruhestellung bei stehender Antriebsrolle in eine von zwei oberen drehrichtungsabhängigen Arbeitsstellungen bei drehender Antriebsrolle verschwenkbar gelagert ist. Die Antriebsrolle (10) weist einen Außenmantel (11) auf, der mit einem zu fördernden Gegenstand in Eingriff gelangen kann. Die Drehrichtung der Antriebsrolle (10) ist umgekehrt zur Verschwenkrichtung beim Verschwenken zwischen Ruhestellung und Arbeitsstellung der Antriebsrolle.

Es wird vorgeschlagen, die Antriebsrolle derart auszubilden, daß der Außenmantel (11) erste, großflächige Reibbelagsabschnitte (12) und über diese hervorragende, kleinerflächige Reibbelagsabschnitte (13) aufweist, die derart angebracht und/oder ausgebildet sind, daß beim Verschwenken der Antriebsrolle (10) von der Ruhe- in die Arbeitsstellungen zuerst die zweiten, kleinerflächigen Reibbelagsabschnitte (13) mit dem zu fördernden Gegenstand in Kontakt gelangen und diese dann im weiteren Verlauf des Verschwenkens und damit steigenden Anpreßkräften zwischen Antriebsrolle (10) und zu förderndem Gegenstand verschoben und/oder verformt werden, bis sie mit den ersten, großflächigen Reibbelagsabschnitten (12) bündig verlaufen und diese (12) mit dem zu fördernden Gegenstand in Eingriff gelangen.

## Beschreibung

Die Erfindung betrifft eine Rollenantriebseinheit nach dem Oberbegriff des Patentanspruches 1.

Derartige Rollenantriebseinheiten werden beispielsweise zum Transport von Frachtbehältern verwendet, die auf Rollenförderbahnen aufgesetzt sind. Solche Frachtbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Container in den Laderaum eines Flugzeuges hineingefahren und dort verstaut werden. Die Rollenantriebseinheit ist demzufolge im Flugzeug selbst installiert.

Beim Einschalten derartiger Rollenantriebseinheiten werden die dazugehörigen Rollen hochgeschwenkt und zwar derart, daß sie sich an den Boden eines über ihnen befindlichen Frachtcontainers pressen. Durch diesen Reibschluß kann das Drehmoment der Antriebsrollen auf den Boden des Frachtcontainers übertragen werden, und die Antriebsrollen befördern diesen somit weiter.

Ein wesentliches Problem bei derartigen Rollenantriebseinheiten liegt darin, daß die Traktionskraft also die Kraft, welche von der Antriebsrolle auf den zu befördernden Gegenstand gebracht wird, möglichst hoch sein soll, ohne aber mit sehr großen Rollen zu arbeiten. Die Kraft, welche die Rolle aus ihrer Ruheposition in eine der beiden Arbeitspositionen hoch hebt, soll dabei möglichst niedrig sein, da die hierfür notwendige Leistung über eine Bremseinrichtung vom Antriebsmoment des Elektromotors abgezweigt wird.

Aus der EP 0 391 175 ist eine Rollenantriebseinheit der eingangs genannten Art bekannt. Die dort beschriebene Relativbewegung zwischen Schwenk- und Drehrichtung führt dazu, daß die Traktionskraft eine Komponente senkrecht hierzu erzeugt, bei Eingriff der Antriebsrolle mit dem zu fördernden Gegenstand also die Verschwenkbewegung in die Arbeitsstellung unterstützt wird. Dies gelingt aber nur dann, wenn tatsächlich eine Traktionskraft auf den zu fördernden Gegenstand und damit in Verschwenkrichtung auf die Antriebsrolle wirkt, wozu wiederum ein Mindest-Drehmoment beim Verschwenken von der Leistung des Antriebsmotors abgezweigt werden muß, damit ein fester reibschlüssiger Eingriff zwischen der Antriebsrolle und dem zu fördernden Gegenstand besteht. Insbesondere dann, wenn die Antriebsrollen und/oder der zu fördernde Gegenstand naß sind, können hier Schwierigkeiten auftreten.

Der Erfindung liegt die Aufgabe zugrunde, eine Rollenantriebseinheit der eingangs genannten Art dahingehend weiterzubilden, daß auf einfache Weise und bei geringem Verschwenkmoment ein sicherer reibschlüssiger Eingriff zwischen Antriebsrolle und zu förderndem Gegenstand gewährleistet wird.

Diese Aufgabe wird durch die im Kennzeichen des Patentanspruches 1 angegebenen Merkmale gelöst.

Ein wesentliches Kriterium der Erfindung liegt darin, daß sozusagen in zwei Stufen gearbeitet wird. In der ersten Stufe wird die Antriebsrolle mit einem relativ geringen Drehmoment von ihrer Ruhestellung in die Arbeitsstellung verschwenkt, bis die kleinerflächigen Reibbelagsabschnitte der Antriebsrolle mit dem zu fördernden Gegenstand in Eingriff gelangen. Da beim ersten Eingriff die zur Verfügung stehenden Kräfte auf eine relativ kleine Fläche verteilt werden, kann ein Wasser- oder Schmutzfilm beiseite gedrückt werden, so daß - wenn auch auf einer kleinen Fläche - ein reibschlüssiger Eingriff sichergestellt ist. Dieser reibschlüssige Eingriff bewirkt aber dann, daß die Traktionskraft, bzw. das Drehmoment, mit welchem die Rolle in Drehung versetzt wird, das Drehmoment in Verschwenkrichtung verstärkt, bis die großflächigen Reibbelagsabschnitte mit dem zu fördernden Gegenstand in Eingriff gelangen, wobei gleichzeitig die kleinfächigen Reibbelagsabschnitte zurückweichen bzw. nachgeben. Es genügt somit ein relativ geringes Drehmoment zum Verschwenken, um eine im Endeffekt sehr hohe Anpreßkraft zu erreichen. Somit kann dann das Antriebsdrehmoment des Elektromotors mit nur geringfügiger Verminderung durch die üblichen Bremseinrichtungen zum Verschwenken der Antriebsrolle als Traktionskraft genutzt werden.

Bei einer bevorzugten Ausführungsform der Erfindung sind die größerflächigen ersten Reibbelagsabschnitte aus einem steiferen Material als die zweiten (kleinflächigen) Reibbelagsabschnitte gefertigt. Dadurch kann sichergestellt werden, daß beim eigentlichen Fördervorgang nur das steifere Material beansprucht wird, was die Standdauer der Rollenantriebseinheit wesentlich erhöht. Hierbei wird (vorzugsweise gleichzeitig) für die Herstellung der zweiten Reibbelagsabschnitte ein Material verwendet, das eine höhere Reibungszahl (mit dem Material des zu fördernden Gegenstands) aufweist als die ersten Reibbelagsabschnitte. Auf diese Weise wird sichergestellt, daß auch bei geringen Anpreßkräften der Reibschluß groß genug ist, um die Antriebsrolle weiterzuverschwenken und damit die Anpreßkraft zu erhöhen.

Die Anpreßrolle wird vorzugsweise ballig ausgebildet. Dadurch kann sichergestellt werden, daß der Antrieb relativ gleichmäßig erfolgt, da bei der derartigen Antriebsrollen die Auflagekräfte in der Mitte der Antriebsrolle (in deren Axialrichtung gesehen) geringer als am Rand sind, wenn man von zylindrischen Rollen ausgeht.

Vorzugsweise werden die kleinerflächigen Reibbelagsabschnitte, in Längsrichtung der Antriebsrolle gesehen, in deren mittleren Bereich angeordnet. Die Gründe hierfür wurden bereits dargelegt.

Man kann die zweiten kleinerflächigen Reibbelagsabschnitte als Einzelsegmente (Noppen) oder dergleichen ausbilden. Besonders ruhig wird der Lauf dann, wenn die zweiten Reibbelagsabschnitte ringförmig, die Antriebsrolle umlaufend, ausgebildet sind. Eine derartige Ausbildung ist dann besonders einfach zu erreichen, wenn man die zweiten Reibbelagsabschnitte als O-Ringe ausbildet und in Nuten anordnet, welche im Außenmantel der Antriebsrolle umlaufend angebracht sind.

Bevorzugte Ausführungsformen der Erfindung ergeben sich aus den Unteransprüchen.

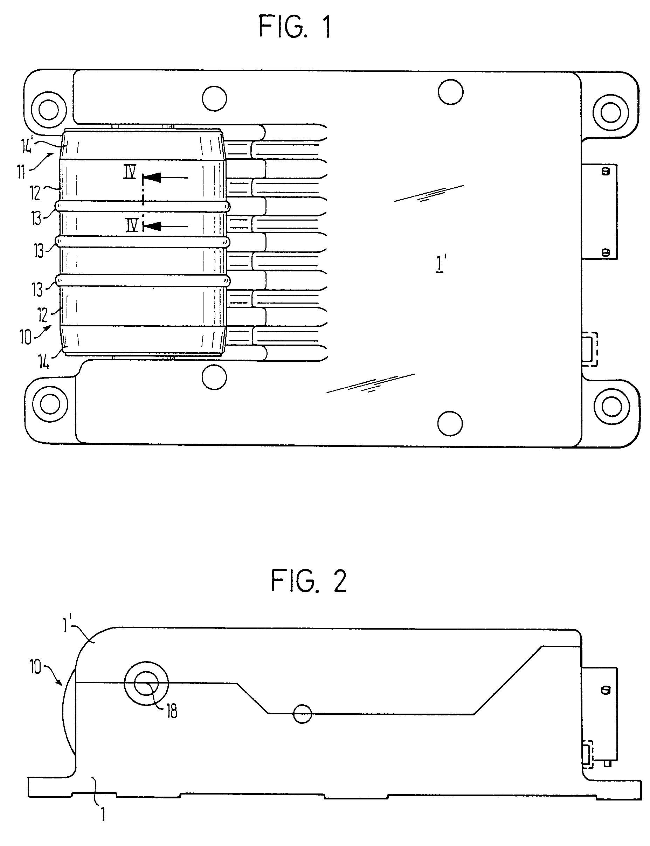

Nachfolgend wird ein Ausführungsbeispiel der Erfindung anhand von Abbildungen näher erläutert. Hierbei zeigen
- **Fig. 1**: eine Rollenantriebseinheit in Draufsicht;
- **Fig. 2**: die Rollenantriebseinheit nach Fig. 1 in Seitenansicht;
- **Fig. 3**: eine schematisierte Darstellung zur Erläuterung des Verschwenkvorgangs;
- **Fig. 4**: einen Teilschnitt entlang der Linie IV-IV aus Fig. 1 und
- **Fig. 5**: einen Teilschnitt gemäß Fig. 4 jedoch im belasteten Zustand der Antriebsrolle.

Wie aus den Abbildungen ersichtlich, umfaßt die Rollenantriebseinheit einen Rahmen 1,1', in welchem eine Antriebsrolle 10 drehbar gelagert ist. Der Elektromotor zum Antrieb der Rolle ist im Gehäuse angebracht und über einen Getriebezug (nicht gezeigt) mit der Antriebsrolle verbunden.

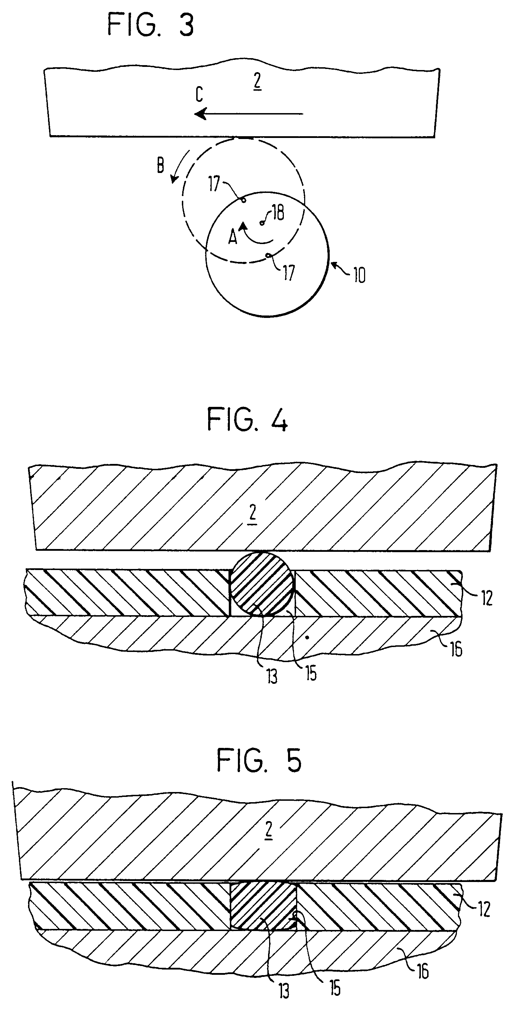

Die Antriebsrolle 10 ist um eine Schwenkachse 18 verschwenkbar, die exzentrisch (versetzt) zur Drehachse 17 verläuft, wie dies in Fig. 3 gezeigt ist. In dieser Abbildung ist die Antriebsrolle 10 in ihrer unteren Ruheposition mit durchgezogenen Linien dargestellt. Wenn der Antriebsmotor in Drehung versetzt wird und sich die Rolle dreht, so wird sie in Richtung des Pfeiles A verschwenkt, während sie sich gleichzeitig in Richtung des Pfeiles B um ihre Drehachse 17 dreht. Die Arbeitsstellung ist in Fig. 3 durch eine durchbrochene Linie angedeutet. In der Arbeitsstellung kann dann die Antriebsrolle 10 mit dem Boden eines zu fördernden Gegenstandes 2 in Eingriff gelangen, um diesen in Richtung des Pfeiles C zu bewegen.

Die Antriebsrolle 10 weist einen Außenmantel 11 auf, der in mehrere erste, großflächige Abschnitte 12 und mehrere zweite, kleinflächige Abschnitte 13 unterteilt ist. Die zweiten Abschnitte 13 stehen über die ersten Abschnitte 12 (in Radialrichtung gesehen) hervor. In den Randbereichen 14, 14' ist die Antriebsrolle 10 konisch sich verjüngend ausgebildet, so daß insgesamt eine gewisse Balligkeit der Antriebsrolle 10 entsteht.

In den Fig. 4 und 5 ist ein Teilschnitt durch die radial gesehen äußerste Schicht der Antriebsrolle 10 gezeigt. Aus diesen Abbildungen geht hervor, daß die ersten Reibbelagsabschnitte 12 auf einer (durchgehenden) Hülse 16 angebracht sind und Nuten 15 aufweisen. In den Nuten 15 sind die als O-Ringe ausgeführten zweiten, kleinerflächigen Reibbelagsabschnitte angebracht.

Wenn nun die Antriebsrolle von ihrer Ruhestellung (siehe Fig. 3) in ihrer Antriebsstellung verschwenkt wird, so gelangen, wie in Fig. 4 gezeigt, zunächst die ersten, kleinerflächigen Reibbelagsabschnitte 13 mit dem Boden des zu fördernden Gegenstandes 12 in Kontakt. Die Drehung der Antriebsrolle 10 um ihre Achse 17' (Pfeil B in Fig. 3) führt nun dazu, daß das die Antriebsrolle 10 verschwenkende Moment in Richtung des Pfeiles A (in Fig. 3) verstärkt wird, die Antriebsrolle sich also "verkeilt". Dadurch wiederum steigt die radial auf die Antriebsrolle vom zu fördernden Gegenstand 2 aufgebrachte Kraft und die zweiten Reibbelagsabschnitte 13 werden zusammengedrückt, wie dies in Fig. 5 gezeigt ist, bis der Boden des zu fördernden Gegenstandes 2 auf den ersten Reibbelagsabschnitten 12 aufliegt. Dadurch kann sichergestellt werden, daß trotz eines relativ geringen, in Richtung des Pfeiles A wirkenden Verschwenkmomentes im Endeffekt eine sehr hohe Anpreßkraft wirkt, die wiederum zu einer sehr hohen Traktionskraft (in Richtung des Pfeiles C in Fig. 3) führt.

Ein weiterer Vorteil der relativ weich ausgebildeten zweiten Reibbelagsabschnitte 13 liegt darin, daß bei einem plötzlichen in Eingriff gelangen zwischen einem zu fördernden Gegenstand 2 (bzw. dessen beim Transport führender Kante) und der Antriebsrolle 10 der entstehende Aufprall abgemildet und damit der Verschleiß der gesamten Rollenantriebseinheit verringert wird.

### Bezugszeichenliste

- 1,1': Rahmen
- 2: Gegenstand
- 10: Antriebsrolle
- 11: Außenmantel
- 12: Erster Reibbelagsabschnitt
- 13: Zweiter Reibbelagsabschnitt
- 14: Randbereich
- 15: Nut
- 16: Hülse
- 17,17': Drehachse
- 18: Schwenkachse

## Patentansprüche

1. Rollenantriebseinheit mit einer über einen Elektromotor antreibbaren Antriebsrolle (10), die in einem Rahmen (1,1') von einer unteren Ruhestellung bei Stehen der Antriebsrolle (10) in eine von zwei oberen, drehrichtungsabhängigen Arbeitsstellungen bei drehender Antriebsrolle (10) verschwenkbar gelagert ist und die einen Außenmantel (11) aufweist, der mit einem zu fördernden Gegenstand (2) in Eingriff gelangt,
**dadurch gekennzeichnet**,
daß der Außenmantel (11) erste, großflächige Reibbelagsabschnitte (12) und über diese hervorragende zweite, kleiner flächige Reibbelagsabschnitte (13) aufweist, die derart angebracht und/oder ausgebildet sind, daß beim Verschwenken der Antriebsrolle (10) von der Ruhestellung in eine der Arbeitsstellungen zuerst die zweiten, kleiner flächigen Reibbelagsabschnitte (13) mit dem zu fördernden Gegenstand (2) in Kontakt gelangen und diese dann im weiteren Verlauf des Verschwenkens und damit steigenden Anpreßkräften zwischen der Antriebsrolle (10) und zu förderndem Gegenstand verschoben und/oder verformt werden, bis sie mit den ersten, großflächigen Reibbelagsabschnitten (12) bündig verlaufen und diese (12) mit dem zu fördernden Gegenstand (2) in Eingriff gelangen.

2. Rollenantriebseinheit nach Anspruch 1,
**dadurch gekennzeichnet**,
daß die ersten Reibbelagsabschnitte (12) aus einem steiferen Material als die zweiten Reibbelagsabschnitte (13) gefertigt sind.

3. Rollenantriebseinheit nach einem der vorhergehenden Ansprüche,
**dadurch gekennzeichnet**,
daß die zweiten Reibbelagsabschnitte (13) eine höhere Reibungszahl aufweisen als die ersten Reibbelagsabschnitte (12).

4. Rollenantriebseinheit nach einem der vorhergehenden Ansprüche,
**dadurch gekennzeichnet**,
daß die Antriebsrolle (10) ballig ausgebildet ist.

5. Rollenantriebseinheit nach einem der vorhergehenden Ansprüche,
**dadurch gekennzeichnet**,
daß die zweiten Reibbelagsabschnitte (13), in Längsrichtung der Antriebsrolle (10) gesehen, in deren mittleren Bereich angeordnet sind.

6. Rollenantriebseinheit nach einem dern vorhergehenden Ansprüche,
**dadurch gekennzeichnet**,
daß die zweiten Reibbelagsabschnitte (13) ringförmig die Antriebsrolle (10) umlaufend ausgebildet sind.

7. Rollenantriebseinheit nach einem der vorhergehenden Ansprüche,
**dadurch gekennzeichnet**,
daß die zweiten Reibbelagsabschnitte (13) als O-Ringe ausgebildet und Nuten (15) angeordnet sind, welche im Außenmantel (11) der Antriebsrolle (10) umlaufend angebracht sind.
